(19) Europäisches Patentamt
European Patent Office
Office européen des brevets

(11) **EP 3 338 441 B1**

(12) **EUROPÄISCHE PATENTSCHRIFT**

(45) Veröffentlichungstag und Bekanntmachung des Hinweises auf die Patenterteilung:
**29.01.2020  Patentblatt 2020/05**

(21) Anmeldenummer: **16763207.4**

(22) Anmeldetag: **18.08.2016**

(51) Int Cl.:
*H04N 5/225* *(2006.01)*     *H04N 5/232* *(2006.01)*

(86) Internationale Anmeldenummer:
**PCT/EP2016/069630**

(87) Internationale Veröffentlichungsnummer:
**WO 2017/029365 (23.02.2017 Gazette 2017/08)**

(54) **MULTIAPERTURABBILDUNGSVORRICHTUNG MIT EINER REFLEKTIERENDE FACETTEN AUFWEISENDEN STRAHLUMLENKVORRICHTUNG**

MULTI-APERTURE IMAGING DEVICE HAVING A BEAM DEFLECTION DEVICE WITH REFLECTIVE FACETS

DISPOSITIF DE REPRODUCTION MULTIOUVERTURE COMPORTANT UN DISPOSITIF DE DÉVIATION DE FAISCEAU PRÉSENTANT DES FACETTES RÉFLÉCHISSANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2015   DE 102015215836**

(43) Veröffentlichungstag der Anmeldung:
**27.06.2018   Patentblatt 2018/26**

(73) Patentinhaber: **Fraunhofer-Gesellschaft zur Förderung der angewandten Forschung e.V.**
**80686 München (DE)**

(72) Erfinder:
• **WIPPERMANN, Frank**
  **98617 Meiningen (DE)**

• **BRÜCKNER, Andreas**
  **07743 Jena (DE)**
• **BRÄUER, Andreas**
  **07646 Schlöben (DE)**
• **OBERDÖRSTER, Alexander**
  **07749 Jena (DE)**

(74) Vertreter: **König, Andreas Rudolf et al Schoppe, Zimmermann, Stöckeler Zinkler, Schenk & Partner mbB Patentanwälte Radlkoferstraße 2 81373 München (DE)**

(56) Entgegenhaltungen:
**WO-A1-2006/101733     US-A1- 2009 268 081**
**US-A1- 2014 111 650**

**Beschreibung**

Die vorliegende Erfindung bezieht sich auf eine Multiaperturabbildungsvorrichtung mit einer reflektierende Facetten aufweisenden Strahlumlenkvorrichtung.

Multiaperturabbildungsvorrichtungen werden insbesondere bei Anwendungen eingesetzt, bei denen eine Ein-Apertur-Abbildungsvorrichtung Nachteile bezogen auf die Baugröße hätte. Beispielsweise werden unterschiedliche Gesichtsfeldabschnitte eines Gesamtgesichtsfeldes auf unterschiedliche Bereiche eines Bildsensors abgebildet. Das geschieht über mehrere optische Kanäle, wobei jeder Kanal durch eine entsprechende Optik definiert ist, die die Abbildung auf den entsprechenden Bereich des Bildsensors vornimmt. Die Strahlengänge der optischen Kanäle in den Optiken können parallel oder nahezu parallel zueinander liegen. Es ergibt sich eine gewisse nicht unterschreitbare Bauhöhe gemessen in einer Richtung z eines Abstands des Bildsensors von den Optiken der Mehrzahl von optischen Kanälen. Das macht sich vor allem bei einzeiligen Arrays von optischen Kanälen bemerkbar, denn dort ist die Ausdehnung der Kombination aus Bildsensor und Optiken der optischen Kanäle gemessen in einer Richtung entlang der Strahlengänge größer als die Bauhöhe (y-Achse), so dass je nach Anwendung ein Einbau von Bildsensor und optischen Kanälen bevorzugt wäre, wonach das eigentlich abzudeckende Gesamtgesichtsfeld nicht frontal, sondern seitlich zu der Kombination aus Bildsensor und optischen Kanälen liegt. In diesem Fall ist es möglich, eine Strahlumlenkvorrichtung zu verwenden, um die Strahlengänge der optischen Kanäle umzulenken. Dabei kann die Strahlumlenkvorrichtung auch dazu verwendet werden, die gegenseitige Orientierung der Strahlengänge von dem parallelen oder nahezu parallelen Verlauf zu verändern, um beispielsweise ausgehend von einer einzeiligen Anordnung der optischen Kanäle ein Gesamtgesichtsfeld zweidimensional in Teilgesichtsfeldern abzudecken, d.h. mit einem Teilgesichtsfeld pro optischen Kanal. Dazu besitzt die Strahlumlenkvorrichtung eine reflektierende Facette pro optischen Kanal. Insbesondere im Niedrigpreisbereich ist es schwierig, die Facetten mit einerseits ausreichender optischer Genauigkeit zur Vermeidung von Bildfehlern und andererseits kostengünstig herzustellen. Das Formen eines Prismas aus Polymer beispielsweise, das eine facettenartige angeschrägte Fläche aufweist, ist schwierig, da der Formungsprozess mit Schwund einhergeht. Das gilt nicht nur für Polymer, sondern auch für Glas. In beiden Fällen treten beim Übergang von der Flüssigkeit respektive Schmelze in den festen Zustand Schwindungen auf. Daraus resultieren wieder Formabweichungen zwischen dem Werkzeug bzw. dem Abformwerkzeug oder der Form einerseits, und der abgeformten Struktur andererseits, welche Formabweichungen wiederum bei dem vorerwähnten Einsatz in Multiaperturvorrichtungen nicht akzeptiert werden können.

US2014/111650 offenbaret eine Multiaperturabbildungsvorrichtung mit einem Bildsensor; einer Mehrzahl von optischen Kanälen; einer Strahlumlenkvorrichtung zum Umlenken von Strahlengängen der Mehrzahl von optischen Kanälen, wobei die Strahlumlenkvorrichtung ein für die Mehrzahl von optischen Kanälen gemeinsames Trägersubstrat aufweist, wobei ein Umlenkwinkel des Umlenkens des Strahlengangs jedes optischen Kanals auf einer Neigung einer dem optischen Kanal zugeordneten reflektierenden Facette einer dem Bildsensor zugewandten Oberfläche der Strahlumlenkvorrichtung bezogen auf das Trägersubstrat, die unter den optischen Kanälen variiert, basiert.

Die Aufgabe der vorliegenden Erfindung besteht deshalb darin, eine Multiaperturabbildungsvorrichtung zu schaffen, die kostengünstig unter Wahrung der optischen Bildqualität herstellbar ist.

Diese Aufgabe wird durch den Gegenstand der unabhängigen Patentansprüche gelöst. Der Kerngedanke der vorliegenden Erfindung besteht darin, erkannt zu haben, dass die Strahlumlenkvorrichtung kostengünstig und ohne Einbußen an optischer Qualität der Multiaperturabbildungsvorrichtung herstellbar ist, wenn für dieselbe ein für die Mehrzahl von optischen Kanälen gemeinsames Trägersubstrat vorgesehen wird, das mit einem Anstellwinkel, also schräg, gegenüber dem Bildsensor in der Multiaperturabbildungsvorrichtung verbaut wird, so dass ein Umlenkwinkel des Umlenkens des Strahlengangs jedes optischen Kanals einerseits auf dem Anstellwinkel und andererseits auf einem individuellen Neigungswinkel einer dem optischen Kanal zugeordneten reflektierenden Facette einer dem Bildsensor zugewandten Oberfläche der Strahlumlenkvorrichtung bezogen auf das Trägersubstrat basiert. Auf diese Weise wird die "Grobumlenkung" der Strahlengänge der optischen Kanäle über den Anstellwinkel erzielt. Dieser Anteil erzeugt also kein Schwundproblem bei dem Abformprozess zur Herstellung der Strahlumlenkvorrichtung. Vielmehr ist es beispielsweise möglich, dass sich die Neigungswinkel auf die gegenseitigen angularen Unterschiede der Strahlumlenkungen der optischen Kanäle beschränken also klein sind und nur wenig zu formendes oder abzuformendes Volumen bedingen.

Vorteilhafte Ausgestaltungen sind Gegenstand der abhängigen Patentansprüche. Bevorzugte Ausführungsbeispiele der vorliegenden Anmeldung werden nachfolgend Bezug nehmend auf die Figuren näher erläutert. Es zeigen:

Fig. 1          ein schematisches Raumbild einer Multiaperturabbildungsvorrichtung gemäß einem Ausführungsbeispiel;

Fig. 2a          einen Graphen, der für die unterschiedlichen Kanäle, aufgetragen über einen Kanalindex entlang der horizontalen Achse, den Strahlumlenkwinkel $\alpha_x$ um die x-Achse zeigt,

wobei $\alpha_x$ entlang der y-Achse in willkürlichen Einheiten aufgetragen ist;

Fig. 2b — einen entsprechenden Graphen, bei dem an der y-Achse für die optischen Kanäle der Umlenkwinkel entlang der dazu senkrechten transversalen Richtung aufgetragen ist, nämlich $\alpha_z$, d.h. die Winkelablenkung aus der yz-Ebene heraus;

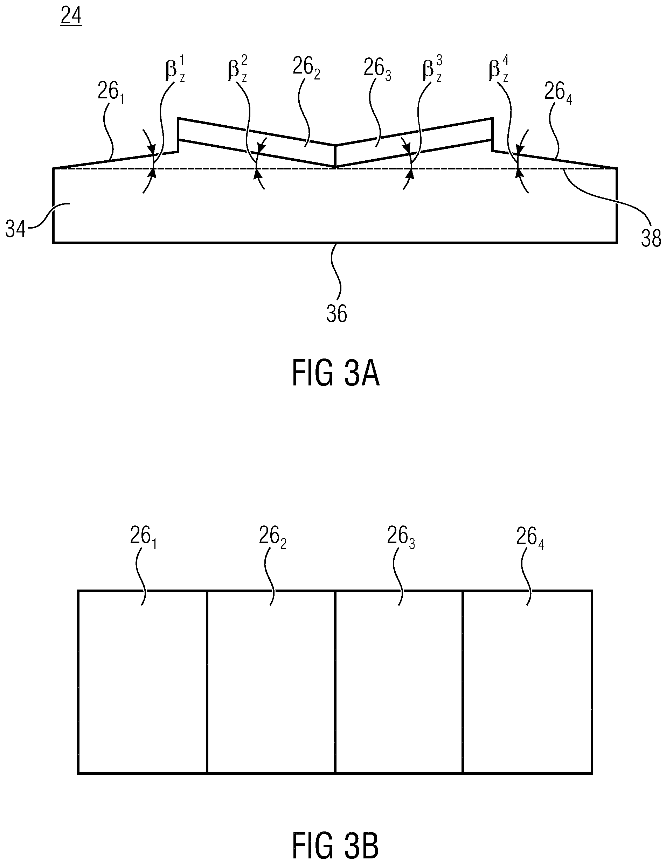

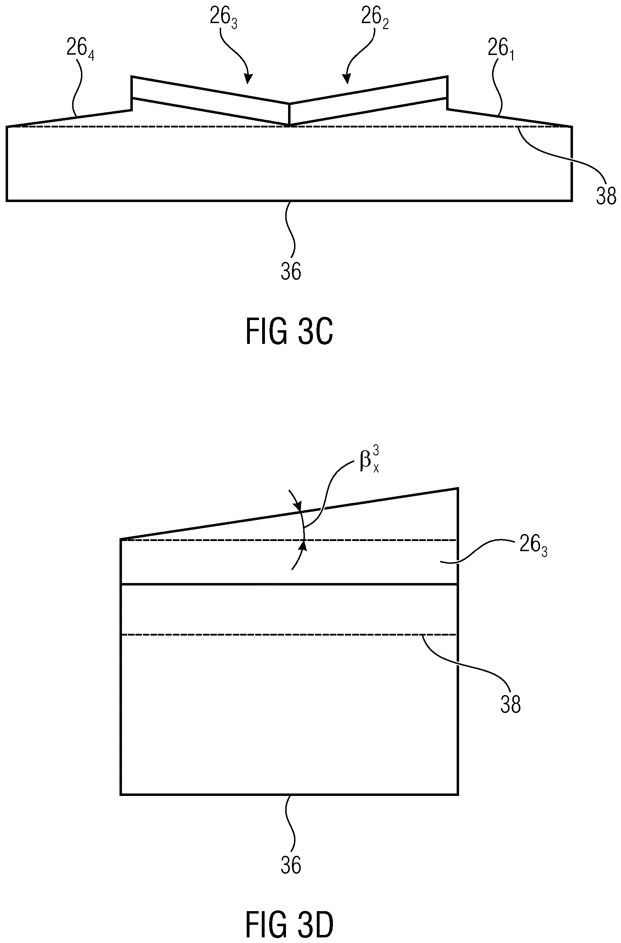

Fig. 3a-d — Seitenansichten bzw. eine Draufsicht einer Strahlumlenkvorrichtung gemäß einem Ausführungsbeispiel, wobei Fig. 3a eine Seitenansicht zeigt, in der das Substrat der Strahlumlenkvorrichtung in der Substratebene selbst zu sehen ist, wobei die Zeilenerstreckungsrichtung quer zur Seitenansicht verläuft, Fig. 3c die entsprechende Seitenansicht aus der entgegengesetzten Richtung zeigt, Fig. 3b eine Draufsicht auf die reflektierenden Facetten senkrecht zur Substratebene zeigt, und Fig. 3d eine Seitenansicht auf die Spiegelumlenkvorrichtung seitlich entlang der Zeilenerstreckungsrichtung zeigt;

Fig. 4a — eine schematische Seitenansicht der Strahlumlenkvorrichtung mit Einzeichnung von Anstellwinkel und kanalindividuellen Neigungswinkeln zeigt, wobei die Seitenschnittebene senkrecht zur Zeilenerstreckungsrichtung verläuft, und wobei der Fall veranschaulicht wird, dass alle Facetten so geneigt sind, dass die dem Bildsensor näherliegende und parallel zur Zeilenerstreckungsrichtung verlaufende Seitenfläche des Substrats dünner ist als die gegenüberliegende, dem Bildsensor abgewandte Seitenfläche;

Fig. 4b — eine Seitenansicht der Strahlumlenkvorrichtung für den zur Fig. 4a alternativen Fall, dass die dem Bildsensor zugewandte Seitenfläche des Substrats dicker ist als die dem Bildsensor weiter entfernte Seitenfläche;

Fig. 4c — eine Seitenschnittansicht einer Spiegelumlenkvorrichtung für den Fall, dass sowohl Facetten gemäß Fig. 4a als auch Facetten gemäß Fig. 4b vorhanden sind;

Fig. 5a — eine Seitenschnittansicht mehrerer Spiegelumlenkvorrichtungen, die im Mehrfachnutzen durch Abformung auf einem gemeinsamen Substrat gebildet und noch nicht vereinzelt sind, wobei die Seitenschnittansicht senkrecht zur Zeilenerstreckungsrichtung verläuft, wenn der spätere Einbau der Spiegelumlenkvorrichtungen in die Multiaperturabbildungsvorrichtung betrachtet wird, bzw. senkrecht zur Längsrichtung der Spiegelumlenkvorrichtungen bezogen auf den Zustand nach Vereinzelung;

Fig. 5b — eine Seitenschnittansicht gemäß Fig. 5a, wobei allerdings eine Mehrfachnutzenherstellung durch einstückiges Formen mittels Prägens oder Spritzgießens veranschaulicht wird, bei dem das geprägte bzw. gegossene Substrat einstückig gebildet ist und selbst die Facetten auf einer dem Bildsensor zuzuwendenden Seite umfasst;

Fig. 6a — die Seitenschnittansicht von Fig. 5a mit eingezeichneten Vereinzelungsschnittlinien parallel zu der Zeilenerstreckungsrichtung bzw. Längsrichtung der Spiegelumlenkvorrichtungen;

Fig. 6b — eine der Fig. 6a für die Fig. 5a entsprechende Seitenschnittansicht für den Fall von Fig. 5b;

Fig. 7 — eine Seitenschnittansicht von im Mehrfachnutzen hergestellten Strahlumlenkvorrichtungen gemäß Fig. 5a oder 5b, wobei hier exemplarisch die Schnittebenen zur Vereinzelung nicht senkrecht zum Substrat verlaufen, sondern schräg zu dem Substrat;

Fig. 8 — eine schematische Seitenschnittansicht einer Spiegelumlenkvorrichtung gemäß Fig. 4b, allerdings unter Verwendung der schrägen Vereinzelung gemäß Fig. 7 zur Veranschaulichung der Vorteile der schrägen Vereinzelung hinsichtlich der Verringerung der Bauhöhe;

Fig. 9    eine schematische Seitenschnittansicht einer Spiegelumlenkvorrichtung, die um eine zur Zeilenerstreckungsrichtung parallele Rotationsachse drehbar gelagert ist, um zwischen einer ersten und einer zweiten Stellung bewegbar zu sein, in welchen die Strahlengänge der optischen Kanäle in entgegengesetzte Richtungen abgelenkt werden;

Fig. 10    eine schematische Raumansicht einer Multiaperturabbildungsvorrichtung gemäß Fig. 1 mit zusätzlichen Einrichtungen zur Änderung der relativen Lagen von Bildsensor 12, Kanalarray und Spiegelumlenkvorrichtung zueinander;

Fig. 11    ein Raumbild eines mobilen Geräts, um einen Verbau der Multiaperturabbildungsvorrichtung zu illustrieren; und

Fig. 12    ein Raumbild eines mobilen Geräts, um einen Verbau zweier Multiaperturabbildungsvorrichtungen zu Stereoskopiezwecken zu illustrieren; und

Fig. 13a und 13b    eine Seitenschnittansicht und eine Draufsicht einer Multiaperturabbildungsvorrichtung gemäß einer Variante zu Fig. 1, bei der die optischen Achsen der Kanäle eine Vorab-Divergenz aufweisen, um divergent in einer gemeinsamen Ebene parallel zur Zeilenerstreckungsrichtung zu verlaufen, so dass die Anzahl der Facetten mit paarweise unterschiedlicher Neigung verringert werden kann.

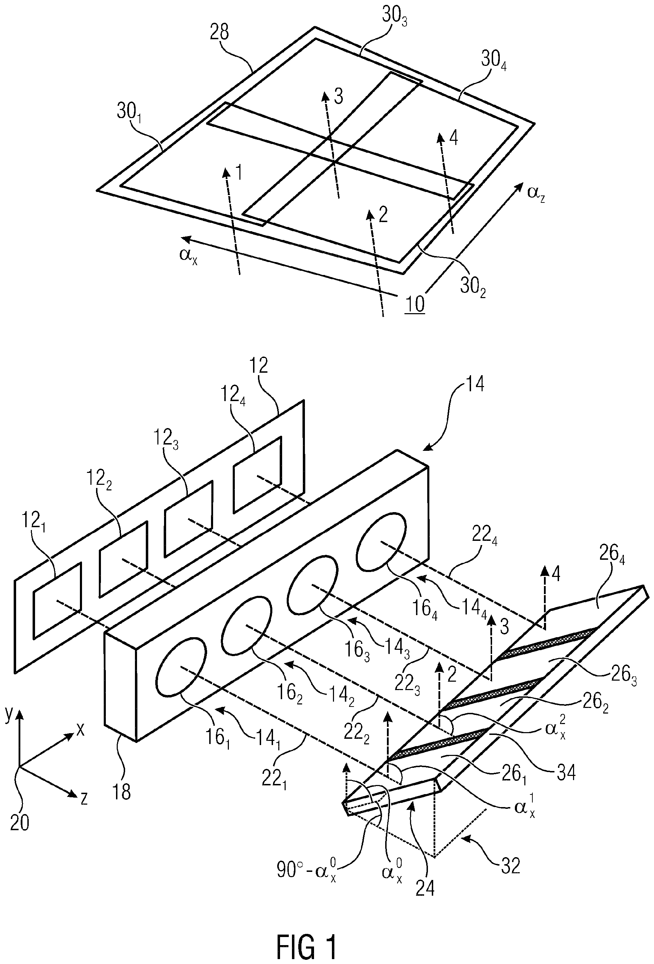

Fig. 1 zeigt ein Ausführungsbeispiel einer Multiaperturabbildungsvorrichtung. Die Multiaperturabbildungsvorrichtung 10 von Fig. 1 umfasst einen Bildsensor 12 und eine Mehrzahl 14 von optischen Kanälen, von denen jeder durch eine jeweilige Optik $16_1$, $16_2$, $16_3$ und $16_4$ definiert wird. Jeder optische Kanal $14_1$, $14_2$, $14_3$, $14_4$ bildet vermittels der zugehörigen Optik $16_1$ - $16_4$ einen kanalindividuellen Ausschnitt eines Gesamtgesichtsfeldes der Multiaperturabbildungsvorrichtung 10 auf einen jeweiligen Bildsensorbereich $12_1$, $12_2$, $12_3$ bzw. $12_4$ des Bildsensors 12 ab. Bei dem Bildsensor 12 kann es beispielsweise um einen Chip handeln, der Pixelarrays in den Bildsensorbereichen $12_1$ - $12_4$ aufweist. Alternativ könnte der Bildsensor 12 einen Pixelarraychip pro Bildsensorbereich $12_1$ - $12_4$ aufweisen. Wiederum möglich wäre es, dass der Bildsensor 12 ein Pixelarray aufweist, das sich kontinuierlich über die Bildsensorbereiche $12_1$ - $12_4$ erstreckt, d.h. ein Pixelarray mit rechteckiger oder anders gearteter Ausdehnung, in welchem sich die Bildsensorbereiche $12_1$ - $12_4$ befinden, wobei in diesem Fall beispielsweise lediglich die Bildsensorbereiche $12_1$ - $12_4$ dieses gemeinsamen kontinuierlichen Pixelarrays des Bildsensors 12 ausgelesen werden. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen montiert sein, wie z.B. alle gemeinsam oder gruppenweise oder dergleichen.

Die Optiken $16_1$ - $16_4$ bestehen beispielsweise jeweils aus einer Linse oder einer Gruppe von Linsen, die, wie es in Fig. 1 gezeigt ist, durch einen gemeinsamen Halter 18 gehaltert sein können. Der Halter 18 ist exemplarisch aus transparentem Material gebildet und wird von den Strahlengängen der optischen Kanäle durchdrungen, aber andere Alternativen für Halter existieren natürlich ebenfalls.

Vorzugsweise sind die Bildsensorbereiche $12_1$ - $12_4$ in einer gemeinsamen Ebene angeordnet, nämlich der Bildebene der optischen Kanäle 14. In Fig. 1 ist diese Ebene exemplarisch parallel zu der Ebene, die durch eine x- und eine y-Achse eines kartesischen Koordinatensystems aufgespannt wird, das in Fig. 1 zur Vereinfachung der nachfolgenden Beschreibung eingezeichnet und mit dem Bezugszeichen 20 versehen ist.

In einer Ebene parallel zum Bildsensor 12, d.h. parallel zur xy-Ebene, sind beispielsweise auch die Optiken $16_1$ - $16_4$ nebeneinander angeordnet. In dem Beispiel von Fig. 1 sind die relativen Positionen der Bildsensorbereiche $12_1$ - $12_4$ in der Bildsensorebene zu dem kongruent zu den relativen Positionen der Optiken $16_1$ - $16_4$ und die Optiken $16_1$ - $16_4$ entlang der x- und y-Achse, d.h. lateral, relativ zu dem Bildsensor 12 so positioniert, dass optische Zentren der Optiken $16_1$ - $16_4$ zentriert zu Zentren der Bildsensorbereiche $12_1$ - $12_4$ angeordnet sind. Das bedeutet, dass bei dem Beispiel von Fig. 1 optische Achsen $22_1$ - $22_4$ der optischen Kanäle $14_1$ - $14_4$ parallel zueinander und parallel zu der z-Achse des Koordinatensystems 20 verlaufen, zu welchen optischen Achsen die Bildsensorbereiche $12_1$ - $12_4$ und die Optiken $16_1$ - $16_4$ zentriert positioniert sind. Es wird darauf hingewiesen, dass zu der bisher beschriebenen Anordnung der Bildsensorbereiche $12_1$ - $12_4$ und der Optiken $16_1$ - $16_4$ auch Alternativen bestehen können. Beispielsweise wäre eine leichte Divergenz der optischen Achsen $22_1$ - $22_4$ ebenfalls denkbar. Ferner ist es möglich, dass die Multiaperturabbildungsvorrichtung über eine oder mehrere Einrichtungen verfügt, die in der Lage sind, eine relative

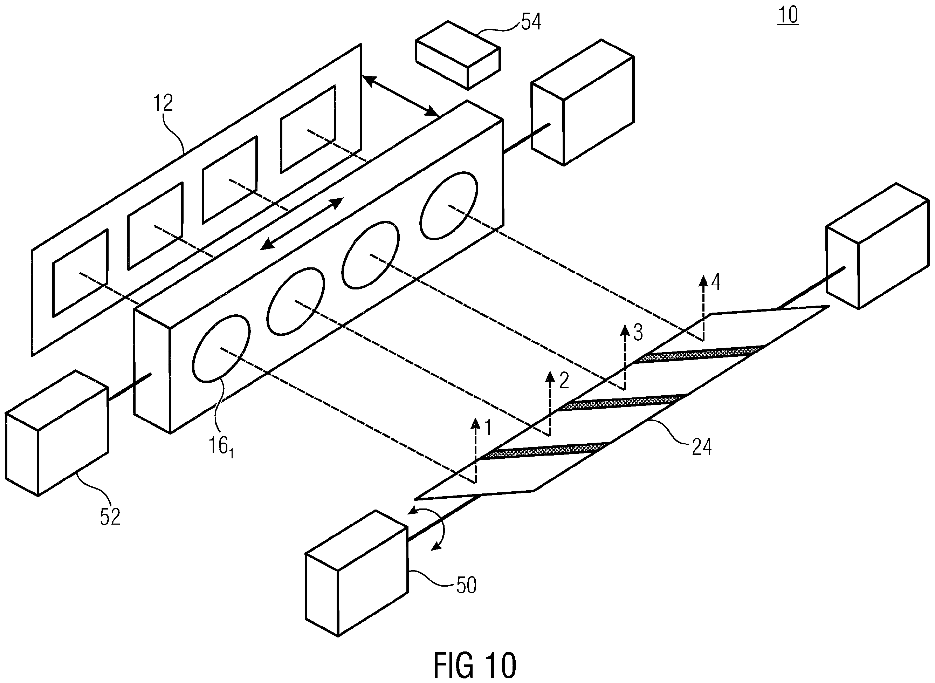

Lage der Optiken $16_1$ - $16_4$ zu den Bildsensorbereichen $12_1$ - $12_4$ in lateraler Richtung, d.h. in x- und/oder y-Richtung, zu verändern, wie z.B. zur Bildstabilisierung. Hierzu sei noch auf Fig. 10 verwiesen.

Die Optiken $16_1$ - $16_4$ bilden Objekte in einer Szene in einem Gesamtgesichtsfeld der Multiaperturabbildungsvorrichtung 10 auf die zugehörigen Bildsensorbereiche $12_1$ - $12_4$ ab und sind dazu in einer entsprechenden Entfernung bzw. unter einem entsprechenden Abstand von dem Bildsensor 12 positioniert. Während dieser Abstand auch fest eingestellt sein könnte, kann die Multiaperturabbildungsvorrichtung alternativ auf eine Einrichtung zum Ändern dieses Bildsensor-zu-Optiken Abstands aufweisen, wie z.B. zur manuellen oder automatischen Fokusänderung.

In Fig. 1 ist die Mehrzahl 14 von optischen Kanälen $14_1$ - $14_4$ als ein einzeiliges Array gebildet. In dem Fall von Fig. 1, sind die optischen Kanäle $14_1$ - $14_4$ nebeneinander entlang der x-Achse angeordnet. Die x-Achse entspricht somit der Zeilenerstreckungsrichtung des Arrays 14. Ebenso sind die Bildsensorbereiche $12_1$ - $12_4$ entlang dieser Richtung nebeneinander angeordnet. In Fig. 1 beträgt die Anzahl der optischen Kanäle exemplarisch Vier, aber eine andere Anzahl größer oder gleich Zwei wäre ebenfalls möglich. In dem Fall eines linearen Arrays von optischen Kanälen, wie er in Fig. 1 dargestellt ist, ist die Größenausdehnung der Multiaperturabbildungsvorrichtung 10, wie sie durch den Bildsensor 12 und die Optiken 16 nach unten hin beschränkt wird, entlang der Zeilenerstreckungsrichtung am größten. Die minimale Ausdehnung der Multiaperturabbildungsvorrichtung 10, wie sie durch die gegenseitige Anordnung von Bildsensor 12 zu Optiken 16 entlang der z-Achse, d.h. entlang der optischen Achsen bzw. Strahlengänge der optischen Kanäle $14_1$ - $14_4$, bestimmt wird, ist zwar kleiner als die minimale Ausdehnung entlang der x-Achse, sie ist aber aufgrund der Ausgestaltung der optischen Kanäle $14_1$ - $14_4$ als einzeiliges Array größer als die Minimalausdehnung der Multiaperturabbildungsvorrichtung in der zu der Zeilenerstreckungsrichtung x senkrechten lateralen Richtung y. Letztere ist durch die laterale Ausdehnung jedes einzelnen optischen Kanals $14_1$ - $14_4$, wie z.B. die Ausdehnung der Optiken $16_1$ - $16_4$ entlang der y-Achse, eventuell inklusive der Halterung 18, gegeben. In dieser Situation mag es abhängig von der Anwendung, d.h. wie z.B. dem Verbau der Multiaperturabbildungsvorrichtung in das Gehäuse einer tragbaren Vorrichtung, wie z.B. eines Mobiltelefons oder dergleichen, bei dem das Gehäuse sehr flach ist, wünschenswert sein, Bildsensor 12 und Optiken $16_1$ - $16_4$ so auszurichten, dass die Gesichtsfelder der optischen Kanäle ohne Strahlumlenkung eigentlich in Richtungen schauen, die von einer eigentlich gewünschten Gesichtsfeldrichtung der Multiaperturabbildungsvorrichtung 10 abweicht. Beispielsweise könnte es wünschenswert sein, die Multiaperturabbildungsvorrichtung 10 so einzubauen, dass Bildsensor 12 und Optiken $16_1$ - $16_4$ senkrecht zu den größten Seiten bzw. den Hauptseiten des flachen Gehäuses ausgerichtet sind, d.h. die optischen Achsen $22_1$ - $22_4$ zwischen Bildsensor 12 und Optiken $16_1$ - $16_4$ parallel zu diesen Hauptseiten liegen, während aber die aufzunehmende Szene in einer Richtung senkrecht dazu liegt, d.h. vor der einen Hauptseite, die beispielsweise die Vorderseite ist und beispielsweise einen Bildschirm aufweist, oder vor der anderen Hauptseite, die beispielsweise die Rückseite des Gehäuses ist.

Aus diesem Grund umfasst die Multiaperturabbildungsvorrichtung 10 eine Strahlumlenkvorrichtung, die die Strahlengänge bzw. die optischen Achsen $22_1$ - $22_4$ der Mehrzahl von optischen Kanäle 14 umlenkt, so dass das Gesamtgesichtsfeld der Multiaperturabbildungsvorrichtung 10 von der Multiaperturabbildungsvorrichtung 10 aus gesehen nicht in der Richtung der z-Achse liegt, sondern woanders. Fig. 1 stellt den exemplarischen Fall dar, dass das Gesamtgesichtsfeld der Multiaperturabbildungsvorrichtung 10 nach Umlenkung im Wesentlichen entlang der y-Achse liegt, d.h. die Umlenkung im Wesentlichen in der zy-Ebene erfolgt.

Bevor auf eine weitere Funktion der Strahlenlenkvorrichtung 24 eingegangen wird, sei darauf hingewiesen, dass die Ausführungen zu dem einzeiligen Charakter des Arrays 14 von optischen Kanäle nicht einschränkend zu verstehen sind, und dass Ausführungsbeispiele der vorliegenden Anmeldung auch Ausführungsformen umfassen, bei denen die Mehrzahl von optischen Kanälen in einem zweidimensionalen Array angeordnet sind. Beispielsweise könnte es aus anderen Gesichtspunkten als den bisher erörterten wünschenswert sein, eine Um-Orientierung des Gesamtgesichtsfeldes der Multiaperturabbildungsvorrichtung 10 relativ zu der Kombination aus Bildsensor 12 und Optiken $16_1$ - $16_4$ vorzunehmen. Solche Gesichtspunkte könnten beispielsweise auch die nachfolgend beschriebene zusätzliche Funktion der Strahlumlenkvorrichtung 24 betreffen.

Wie es im Vorhergehenden beschrieben wurde, sind bei dem Ausführungsbeispiel von Fig. 1 die optischen Achsen $22_1$ - $22_4$ vor der bzw. ohne die Umlenkung durch die Strahlumlenkvorrichtung 24 bzw. an beispielsweise den Optiken $16_1$ - $16_4$ parallel zueinander, wie es in Fig. 1 gezeigt ist, oder aber sie weichen hiervon nur wenig ab. Die damit korrespondierende zentrierte Positionierung von Optiken $16_1$ - $16_4$ sowie der Bildsensorbereiche $12_1$ - $12_4$ ist einfach herzustellen und günstig hinsichtlich der Minimierung des Bauraums. Die Parallelität der Strahlengänge der optischen Kanäle bedingt aber auch, dass sich die Teilgesichtsfelder, die durch die einzelnen Kanäle $14_1$ - $14_N$ abgedeckt bzw. auf die jeweiligen Bildsensorbereiche $12_1$ - $12_4$ abgebildet werden, ohne weitere Maßnahmen, wie nämlich die Strahlumlenkung, vollständig überlappen würden. Um ein größeres Gesamtgesichtsfeld durch die Multiaperturabbildungsvorrichtung 10 abzudecken, besteht nun eine weitere Funktion der Strahlumlenkvorrichtung 24 von Fig. 1 darin, die Strahlengänge so mit einer Divergenz zu versehen, dass sich die Teilgesichtsfelder der Kanäle $14_1$ - $14_N$ weniger gegenseitig überlappen.

Beispielsweise sei angenommen, dass die optischen Achsen $22_1$ - $22_4$ der Strahlengänge der optischen Kanäle $14_1$ - $14_4$ vor bzw. ohne die Strahlumlenkvorrichtung 24 parallel zueinander sind oder gegenüber einer parallelen Ausrichtung entlang der über alle Kanäle gemittelten Ausrichtung um weniger als ein Zehntel eines minimalen Öffnungswinkels der Teilgesichtsfelder der optischen Kanäle $14_1$ - $14_N$ abweichen. Ohne zusätzliche Maßnahmen überlappten dann die Teilgesichtsfelder größtenteils. Die Strahlumlenkvorrichtung 24 von Fig. 1 umfasst deshalb für jeden optischen Kanal $14_1$ - $14_N$ eine diesem Kanal eindeutig zugeordnete reflektierende Facette $26_1$ - $26_4$, die jeweils optisch planar sind und gegeneinander geneigt sind, nämlich so, dass die Teilgesichtsfelder der optischen Kanäle raumwinkelmäßig weniger überlappen und beispielsweise ein Gesamtgesichtsfeld abdecken, das einen Öffnungswinkel aufweist, der beispielsweise größer ist als 1,5 mal dem Öffnungswinkel der einzelnen Teilgesichtsfelder der optischen Kanäle $14_1$ - $14_N$. In dem exemplarischen Fall von Fig. 1 sorgt die gegenseitige Neigung der reflektierenden Facette $26_1$ - $26_4$ beispielsweise dafür, dass die eigentlich ja linear entlang der x-Achse nebeneinander angeordneten optischen Kanäle $14_1$ - $14_N$ das Gesamtgesichtsfeld 28 gemäß einer zweidimensionalen Anordnung der Teilgesichtsfelder $30_1$ - $30_4$ abdecken.

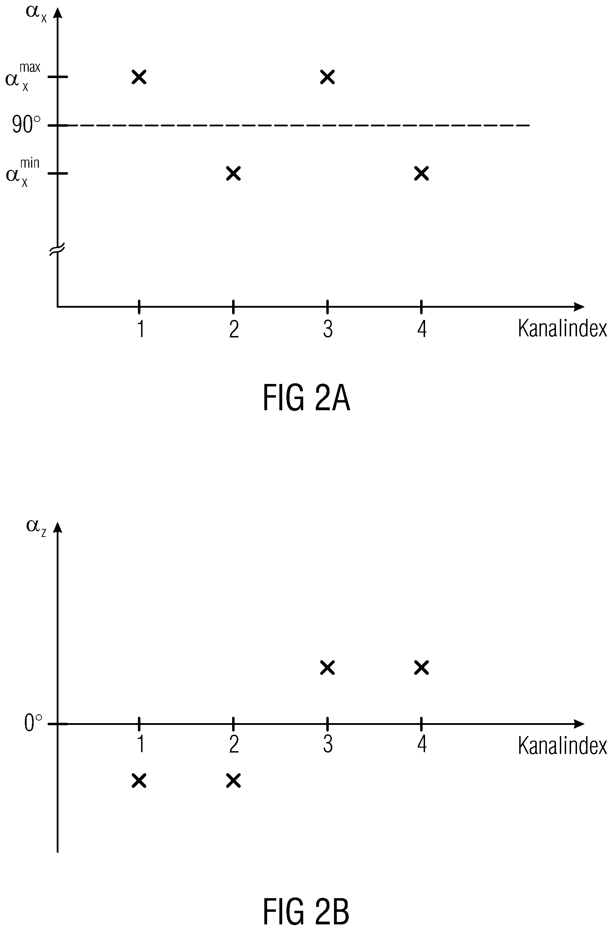

Betrachtet man bei dem Ausführungsbeispiel von Fig. 1 die angulare Ablenkung der optischen Achsen $22_1$ - $22_4$ des optischen Kanals $14_1$ - $14_4$ in der Ebene, die durch die gemittelte Richtung der optischen Achsen vor der Strahlumlenkung und der gemittelten Richtung der optischen Achsen nach der Strahlumlenkung aufgespannt wird, d.h. in der xy-Ebene in dem Beispiel von Fig. 1, einerseits und in der Ebene, die senkrecht zu der letztgenannten Ebene und parallel zur gemittelten Richtung der optischen Achse nach Strahlumlenkung verläuft, andererseits, so ergibt sich das in den Fig. 2a und Fig. 2b gezeigte Verhalten. Fig. 2a zeigt die Strahlablenkung $\alpha_x$ in der erstgenannten Ebene und Fig. 2b zeigt die Strahlablenkung in der zuletzt genannten Ebene, nämlich $\alpha_z$. Die Fig. 2a und 2b veranschaulichen den Fall, dass die mittlere Strahlumlenkung der optischen Achsen derart ist, dass die mittlere Richtung nach Strahlumlenkung der y-Achse entspricht. Im Mittel werden die optischen Achsen der optischen Kanäle also um 90° in der yz-Ebene um die x-Achse umgelenkt und im Mittel werden die optischen Achsen nicht aus der yz-Ebene herausgekippt.

Man könnte nun, wie es mit gestrichelten Linien in Fig. 1 bei 32 angedeutet ist, einen im Wesentlichen Prisma-förmigen Körper als Strahlumlenkvorrichtung formen aber das ginge mit den in der Beschreibungseinleitung der vorliegenden Anmeldung bereits angedeuteten Nachteilen einher: die bei der Abformung auftretende Schwindung ist abhängig von der Materialmenge des zu formenden Materials und somit wäre die Formung eines Körpers, wie er mit 32 angedeutet ist, mit Schwierigkeiten verbunden, die entweder die Herstellungskosten erhöhen oder zu einer geringeren Qualität der optischen Abbildungen der optischen Kanäle $14_1$ - $14_N$ führen.

Aus letztgenanntem Grund wird, wie es nachfolgend noch näher veranschaulicht wird, die Strahlumlenkvorrichtung 24 von Fig. 1 so hergestellt, dass sie ein gemeinsames Trägersubstrat 34 aufweist, das für die Mehrzahl 14 von optischen Kanälen gemeinsam ist, d.h. sich über alle optischen Kanäle erstreckt. Das Trägersubstrat 34 wird mit einem Anstellwinkel $\alpha_x^0$ gegenüber dem Bildsensor 12 geneigt platziert, nämlich um die Achse, um die die mittlere Richtung der optischen Achsen der optischen Kanäle umgelenkt wird, d.h. die x-Achse in Fig. 1. Dieser Anstellwinkel sorgt dafür, dass die den Bildsensor 12 zugewandte Oberfläche der Strahlumlenkvorrichtung 24 bereits eine "Grobumlenkung" der Strahlengänge der optischen Kanäle bewirkt.

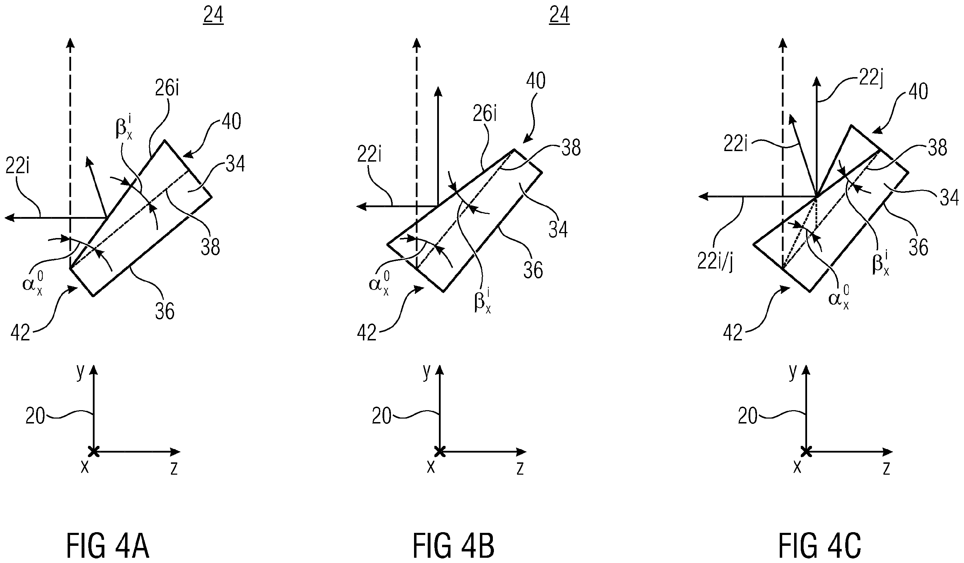

Sei $\alpha_x^{min}$ beispielsweise die minimale Strahlumlenkung der optischen Achsen $16_1$ - $16_4$ der optischen Kanäle $14_1$ - $14_4$ um die x-Achse, d.h. $\alpha_x^{min} = \min\{\alpha_x^i\}$ mit $\alpha_x^i$ gleich der Strahlumlenkung des optischen Kanals $14_i$ mit $\alpha_x^i = 0$ bedeutend, dass keine Strahlumlenkung eintritt, dann kann beispielsweise das Trägersubstrat 24 so gegenüber dem Bildsensor 12 geneigt sein, dass $90° - \alpha_x^0 \leq \frac{1}{2} \cdot \alpha_x^{min}$ gilt, wobei $\alpha_x^0$ größer 0° und kleiner 90° ist und $\alpha_x^0 = 0°$ der planparallelen Ausrichtung des Trägersubstrats 34 zum Bildsensor 12 entsprechen soll. Dieser Fall wird nachher noch bezugnehmend auf Fig. 4a aufgegriffen. Wie zu dort sehen ist, sind die reflektierendes Facetten $26_{1-4}$ in diesem Fall in der yz-Ebene gegenüber dem Substrat nicht oder nur in der Richtung geneigt, so dass die dem Bildsensor nähere Seitenfläche des Substrats schmäler ist als die in die entgegengesetzte Richtung weisende. Gilt die Gleichheit, d.h. $90° - \alpha_x^0 = \frac{1}{2} \cdot \alpha_x^{min}$, existiert zumindest eine Facette, die in der yz-Ebene nicht gegenüber dem Substrat geneigt ist.

Sei $\alpha_x^{max}$ beispielsweise die maximale Strahlumlenkung der optischen Achsen $16_1$ - $16_4$ der optischen Kanäle $14_1$ - $14_4$ um die x-Achse, d.h. $\alpha_x^{mx} = \mathrm{mx}\{\alpha_x^i\}$. Dann könnte beispielsweise das Trägersubstrat 24 auch so gegenüber dem Bildsensor 12 geneigt sein, dass $90° - \alpha_x^0 \geq \frac{1}{2} \cdot \alpha_x^{max}$ gilt. Dieser Fall wird nachher noch bezugnehmend auf Fig. 4b aufgegriffen. Wie dort zu sehen ist, sind die reflektierendes Facetten $26_{1-4}$ in diesem Fall in der yz-Ebene gegenüber dem Substrat nicht oder nur in der Richtung geneigt, so dass die dem Bildsensor nähere Seitenfläche des Substrats breiter ist als die in die entgegengesetzte Richtung weisende. Gilt die Gleichheit, d.h. $90° - \alpha_x^0 = \frac{1}{2} \cdot \alpha_x^{max}$, existiert zumindest eine Facette, die in der yz-Ebene nicht gegenüber dem Substrat geneigt ist.

Auf die beschriebene Art und Weise ist es möglich, dass die Strahlumlenkvorrichtung 24 über eine rein Parallelepiped-förmige Form hinaus lediglich an der dem Bildsensor 12 zugewandten Seite zusätzliches Material (zusätzlich zu der reinen Parallelepipedform) aufweist, um die gegenseitigen Neigungen der reflektierenden Facetten $26_1$ - $26_4$ zu bilden. Diese Neigungswinkel sind aber viel kleiner als die Gesamtumlenkwinkel $\alpha_x^i$, denn sie sollen lediglich noch die restlichen Umlenkungen der Strahlengänge vornehmen. Für die Neigungswinkel $\beta_x^i$ in der yz-Ebene, nämlich die restliche Umlenkung um die x-Achse, gilt nun $\beta_x^i = \left| \frac{1}{2} \left( \alpha_x^i - 2 \left( 90° - \alpha_x^0 \right) \right) \right|$. Die Neigungswinkel in der yz-Ebene entsprechen also den Hälften der feineren kanalindividuellen Umlenkungen. In der anderen transversalen Richtung betreffend die Strahlumlenkung aus der YZ-Ebene heraus, sind die Umlenkwinkel $\alpha_z^i$ und damit auch die Neigungswinkel $\beta_z^i$ der Facetten aus der Substratebene entlang der x-Achse ohnehin klein.

Das bedeutet für die Umlenkwinkel des Umlenkens des Strahlengangs jedes optischen Kanals durch die Strahlumlenkvorrichtung 24, dass dieselben jeweils auf dem Anstellwinkel $\alpha_x^0$ basieren sowie auf der jeweiligen Neigung der dem optischen Kanal zugeordneten reflektierenden Facette bezogen auf das Trägersubstrat 34 selbst. Diese erwähnten Facetten-individuellen Neigungen der Facetten $26_1$ - $26_4$ können wie soeben beschrieben durch einen Neigungswinkel in der yz-Ebene und einen Neigungswinkel gegenüber der Normalen des Trägersubstrats 3 in der dazu senkrechten Ebene beschrieben werden. Es wird bevorzugt, wenn gilt, dass für jeden Kanal der Anstellwinkel $\alpha_x^0$ größer ist als die Neigung, d.h. $\alpha_x^0 > \max(|\beta_x|, |\beta_z|)$ für alle Kanäle. Es wird noch mehr bevorzugt, wenn besagte Ungleichung bereits für $\alpha_x^0 / 2$ oder sogar für $\alpha_x^0 / 3$ erfüllt ist. In anderen Worten ausgedrückt, wird es bevorzugt, wenn der Anstellwinkel verglichen zu den Neigungswinkeln der Facetten $26_1$ - $26_N$ groß ist, so dass das zusätzliche Material gegenüber einer rein parallelepipedförmigen Form der Strahlumlenkvorrichtung 24 gering ist. $\alpha_x^0$ kann beispielsweise zwischen 30° und 60° jeweils inklusive liegen.

Fig. 3a-3d zeigen Seitenansichten einer Strahlumlenkvorrichtung gemäß einem Ausführungsbeispiel für exemplarisch vier optische Kanäle, die wie in Fig. 1 exemplarisch dargestellt linear bzw. einseitig angeordnet sind. Die Strahlumlenkvorrichtung 24 von Fig. 3a-3d könnte als Strahlumlenkvorrichtung von Fig. 1 verwendet werden, wobei dann allerdings die Teilgesichtsfelder nicht wie in Fig. 1 dargestellt im Uhrzeigersinn 3, 4, 2, 1 das Gesamtgesichtsfeld abdecken würden, sondern im Uhrzeigersinn gemäß der Reichenfolge 4, 2, 1, 3. Die Neigungswinkel der Facetten $26_1$ - $26_4$ sind in Fig. 3a-3d eingezeichnet. Sie sind durch hochgestellte Indizes 1-4 voneinander unterschieden bzw. dem jeweiligen Kanal zugeordnet. $\beta_x^1$ ist hier ebenso wie $\beta_x^4$ 0°. Die Rückseite des Trägersubstrats, d.h. die Seite, die der mit den Facetten $26_1$ - $26_4$ versehenen Oberfläche gegenüberliegt, ist in Fig. 3a-3d mit 36 angezeigt. Das den parallelepipedförmigen Anteil des Trägersubstrats 34 bildenden Material befindet sich unterhalb der gestrichelten Linie 38. Es ist ersichtlich, dass das zusätzliche Material, das diesem hinzukommt, wenig Volumen aufweist, so dass eine Abformung erleichtert wird.

Die Herstellung der Strahlumlenkvorrichtung 24 von Fig. 3a-3d kann beispielsweise dadurch erfolgen, dass auf das Trägersubstrat 34 das zusätzliche Material durch ein Abformwerkzeug abgeformt wird. Das Trägersubstrat 34 könnte hierbei beispielsweise Glas sein, während das abgeformte zusätzliche Material darauf Polymer ist. Eine weitere Möglichkeit bestünde darin, dass die Strahlumlenkvorrichtung 24 von Fig. 3a-3d einstückig durch Spritzguss oder dergleichen gebildet wird.

Bei den vorhergehend beschriebenen Ausführungen wurde schon beschrieben, dass wie in Fig. 4a angedeutet die Neigungswinkel der Facetten $26_i$ der Kanäle $14_i$ um die x-Achse bzw. in der yz-Ebene in die gleiche Richtung geneigt sein können, nämlich entgegen dem Anstellwinkel $\alpha_x^0$ des Trägersubstrats 34 der Strahlumlenkvorrichtung 24 relativ zum Bildsensor 12, so dass für alle Facetten $26_i$ aller Kanäle gilt, dass die Dicke der Strahlumlenkvorrichtung 24 an der dem Bildsensor 12 weiter entfernten Seite 40 größer ist als an der dem Bildsensor näheren Seite 42. Hierzu existieren allerdings Alternativen, die in Fig. 4b und 4c dargestellt sind. Gemäß Fig. 4b verhält sich der soeben genannte Umstand umgekehrt, Das heißt, die Neigungswinkel der Facetten $26_i$ in der yz-Ebene, d.h. die Neigungen $\beta_x^i$ sind derart, dass für alle Facetten $26_i$ gilt, dass die Strahlumlenkvorrichtung 24 eine dem Bildsensor zugewandte Seite 42 aufweist, an der dieselbe dicker ist als an der dem Bildsensor abgewandten Seite 40. Fig. 4b gilt also Bezug nehmend auf die Fig. 2a und 2b: $90° - \alpha_x^0 \geq \frac{1}{2} \cdot \alpha_x^{max}$. Gemäß Fig. 4c ist es möglich, dass beide Fälle auftreten, d.h. eine Facette $26_i$ ist gemäß Fig. 4a geneigt, und eine Facette $26_j$ ist gemäß Fig. 4b geneigt. Hier gilt also:

$$\tfrac{1}{2} \cdot \alpha_x^{max} \; \leq \; 90° - \alpha_x^0 \; \leq \; \tfrac{1}{2} \cdot \alpha_x^{min}.$$

Das Ausführungsbeispiel von Fig. 1 mit der Umlenkvorrichtung von Fig. 3 stellt somit eine Multiaperturabbildungsvorrichtung dar, bei der jeder Kanal eine Abbildung auf einen Bildsensorbereich $12_i$ definiert und dazu eine zugehörige Abbildungsoptik $16_i$ umfasst und durch ein zugehöriges Segment bzw. eine Facette $16_i$ der Strahlumlenkvorrichtung 14 umgelenkt wird. Die Facetten $26_i$ stellen Abschnitte der Oberfläche bzw. Seite der Strahlumlenkvorrichtung 24 dar, die dem Bildsensor 12 zugewandt sind. Sie können mittels Abformung aus einem Polymer, wie z.B. einem UV-aushärtendem Polymer, auf einem gemeinsamen, planaren Substrat 34 hergestellt sein, wie z.B. aus Glas, Polymer, Metall, Silizium oder anderen geeigneten Materialien. Der Körper bestehend aus dem planaren Substrat 34 und den darauf abgeformten Prismen, nämlich einem für jeden Kanal $14_i$, welcher Körper die Umlenkvorrichtung 24 bildet, kann dabei so zur optischen Achse $22_i$ der Abbildungskanäle $14_i$ ausgerichtet sein, dass die Flächennormale des Substrats 34, d.h. die Normale auf dem parallelepipedförmigen Anteil der Strahlumlenkvorrichtung 24, zur optischen Achse $22_i$ einen Winkel > 0 und < 90° einnimmt und vorteilhafter Weise in etwa 45° beträgt, wie z.B. zwischen 30° und 60° jeweils einschließlich liegt.

Gemäß einem Ausführungsbeispiel werden eine Vielzahl von Umlenkvorrichtungen 24 gleichzeitig auf einem Substrat mittels Replikationsprozessen hergestellt. Ein Ausführungsbeispiel folgt. Um die Facetten $26_i$ mit Reflektivität zu versehen, kann entweder ein reflektives Material abgeformt werden, oder die Vorderseiten bzw. Facetten $26_i$ können mit einer Verspiegelung versehen sein. Die Spiegel können sowohl metallische als auch dielektrische Schichten umfassen.

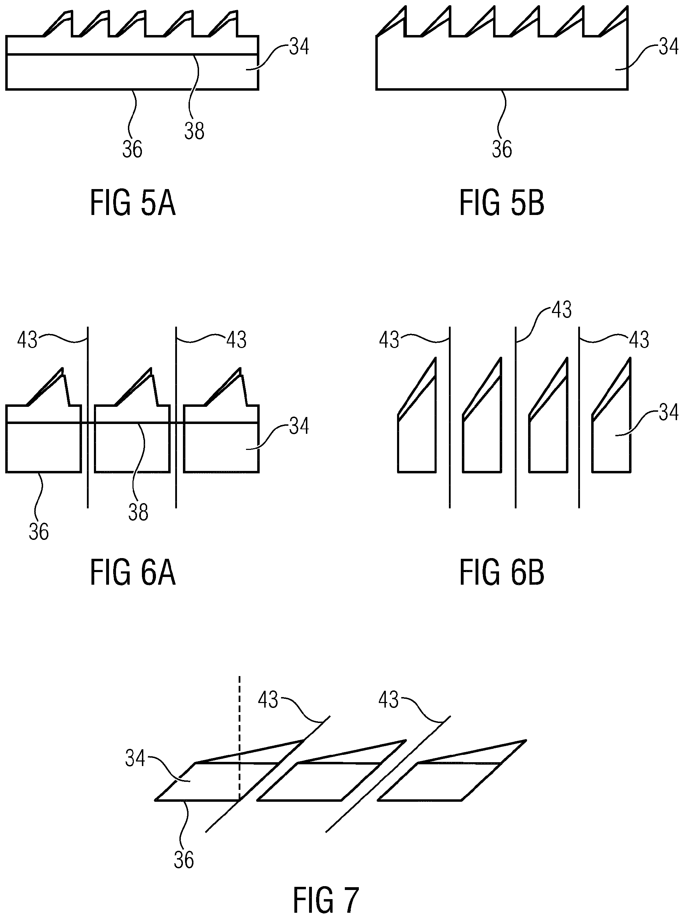

In wiederum anderen Worten ausgedrückt können Umlenkvorrichtungen gemäß Fig. 3 im Vielfachnutzen hergestellt werden. Dabei können die Umlenkvorrichtungen wie in Fig. 5a angedeutet mittels Abformung von beispielsweise Polymer auf einem planaren Substrat hergestellt werden, oder die Herstellung erfolgt mittels Gießens oder Prägens von Glas oder Polymer, so dass sich ein einkomponentiges Gebilde ergibt, wie es in Fig. 5b angedeutet ist. Die einzelnen Umlenkvorrichtungen können dann nachfolgend durch Sägen, Lasern, Sand- oder Wasserstrahlschneiden vereinzelt werden. Die Trennung könnte natürlich durch Sägeschnitte 43 senkrecht zum Trägersubstrat 34 bzw. senkrecht zur Rückseite 38 desselben erfolgen. Vorteilhafterweise kann die Trennung aber auch so erfolgen, dass sich Schnittflächen durch die Vereinzelungsschnitte ergeben, die mit den Flächennormalen des Trägersubstrats 34 einen Winkel ≠ 0 einnehmen. Senkrechte Schnitte sind in den Fig. 6a für den Fall des Abformens von Polymer auf einem Trägersubstrat und in Fig. 6b für den Fall des Prägens aus einem Material mit anschließenden senkrechten Schnitten dargestellt und Fig. 7 zeigt exemplarisch für den Fall der Abformung von Polymer auf einem planaren Trägersubstrat die Vereinzelung entlang schräger Schnittflächen 43, d.h. entlang Schnittflächen, die winklig zu der Flächennormalen des Trägersubstrats sind.

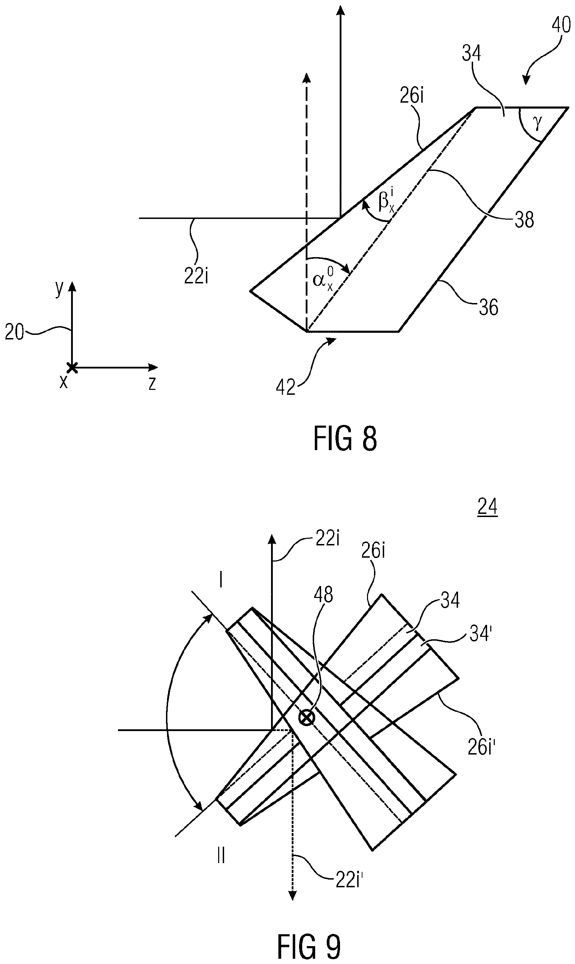

Wozu dies gut sein kann, zeigt Fig. 8: Der Schnittwinkel der Vereinzelungsschnittebenen zwischen benachbarten Umlenkvorrichtungen, die parallel zu der Zeilenerstreckungsrichtung verlaufen, kann so gewählt werden, dass beim Verbau in die Multiaperturabbildungsvorrichtung 10 diese Schnittflächen parallel oder nahezu parallel zu den optischen Achsen $22_i$ der optischen Kanäle $14_i$ vor bzw. ohne Strahlumkehr verlaufen, so dass sich insgesamt eine minimale Bauhöhe des gesamten Systems der Multiaperturabbildungsvorrichtung 10 ergibt. Fig. 8 veranschaulicht die minimale Bauhöhe, die sich hierdurch ergibt, und zwar veranschaulichend für den Fall von Fig. 4b, bei dem für jeden Kanal i die Facetten in der yz-Ebene, d.h. in der Ebene, in der auch der Anstellwinkel am größten ist, so geneigt sind, dass die von dem Bildsensor 12 am weitest entfernt gelegene Seite 40 des Trägersubstrats 34, die senkrecht zur vorerwähnter Ebene verläuft, d.h. parallel zur Zeilenerstreckungsrichtung des Bildsensors 12, durch das zusätzliche Material zur Bildung der Facetten $26_i$ nicht oder weniger gegenüber der Parallelepipedform des Trägersubstrats 34 in Dickenrichtung des Trägersubstrats 34 vergrößert ist als die gegenüberliegende, näher am Bildsensor 12 gelegene Seite 42. Diese Seiten 40 und 42 verlaufen nun, wie in Fig. 8 gezeigt, parallel zum bildsensorseitigen Teil des Strahlengangs bzw. der optischen Achse $22_i$. Vorteilhafterweise schneiden bei der Konfiguration von Fig. 4b die Vereinzelungsebenen, die in Fig. 6a, 6b und 7 mit Linien 43 angedeutet sind, nicht das zusätzliche, die Facetten bildende Material. Das wäre bei der Konfiguration von Fig. 4a für alle Facetten und bei der Konfiguration von Fig. 4c für diejenigen Facetten, die der Konfiguration von Fig. 4a entsprechen, nicht der Fall. Wie ein Vergleich zwischen den Fig. 4b und Fig. 8 aber zeigt, ist die Bauhöhe in der y-Richtung in dem Fall von Fig. 8 aber gegenüber dem Fall von Fig. 4b verkleinert. Für den Winkel γ zwischen der Seite 40 und der Rückseite 36 in der yz-Ebene gilt beispielsweise, dass

$$0{,}9 \cdot (90° - \alpha_x^0) \; \leq \; \gamma \; \leq \; 1{,}1 \cdot (90° - \alpha_x^0).$$

Fig. 9 veranschaulicht noch exemplarisch für den Fall von Fig. 4a, dass symmetrisch zur Rückseite 36 die Strahlumkehrvorrichtung zusätzlich zum Substrat 34 ein gleichgeformtes Substrat 34' aufweisen könnte. Durch drehbar gelagerte Aufhängung der Strahlumlenkvorrichtung 24 um eine Achse 48, die entlang der Zeilenerstreckungsrichtung bzw. entlang der x-Achse verläuft, könnte dann die Strahlumlenkvorrichtung 24 von einer Stellung I mit dem vorbeschriebenen Anstellwinkel auf eine Stellung II mit einem Anstellwinkel geändert werden, der einer entgegengesetzten Neigung gegenüber dem Bildsensor 12 entspricht und somit dazu führt, dass bei der Stellung I die Facetten $26_i$ die vorerwähnte Strahlumlenkung bewirken, während in der Stellung II die Fa-

cetten $26_i'$ eine Strahlumlenkvorrichtung in eine im Wesentlichen entgegengesetzte Richtung bewirken, wie es in Fig. 9 mit $22_i$ bzw. $22_i'$ angedeutet ist. Natürlich wäre es auch möglich, diese Umschaltbarkeit durch Drehung um Achse 48 auch bei Konfigurationen gemäß Fig. 4b oder Fig. 4c anzuwenden. Zur Herstellung könnten beispielsweise die Rückseiten 36 der beiden Substrate 34 und 34' miteinander verbunden werden, wie z.B. durch Kleben oder einen anderen Fügeprozess.

Es wurde bereits weiter oben darauf hingewiesen, dass die Strahlengänge bzw. optischen Achsen von einer Parallelität vor bzw. Strahlumlenkung abweichen sein könnten. Dieser Umstand wird im Folgenden damit umschrieben, dass die Kanäle mit einer Art Vorab-Divergenz versehen sein können. Mit dieser Vorab-Divergenz der optischen Achsen $22_1$ - $22_4$ wäre es möglich, dass sich beispielsweise nicht alle Facettenneigungen unterscheiden, sondern dass manche Gruppen von Kanälen beispielsweise die Facetten mit gleicher Neigung besitzen. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch lateralen Versatz zwischen optischen Zentren der Optiken und Bildsensorbereichen der Kanäle erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der Anderen Transversalebene, d.h. sind alle parallel zur Zeilenerstreckungsrichtung ($\beta^i_z=0$ für alle i) und gegeneinander nur noch unterschiedlich zur vorerwähnten gemeinsamen Ebene der optischen Achsen geneigt ($\beta^i_x\neq0$ für alle i), wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden.

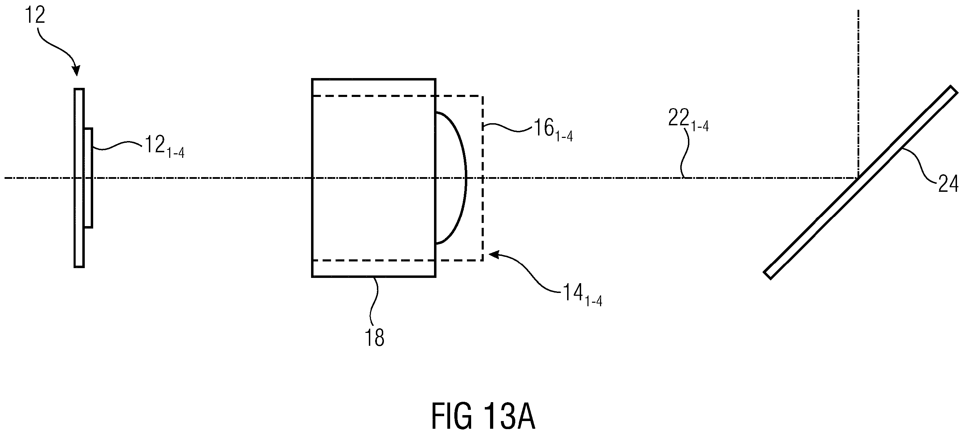

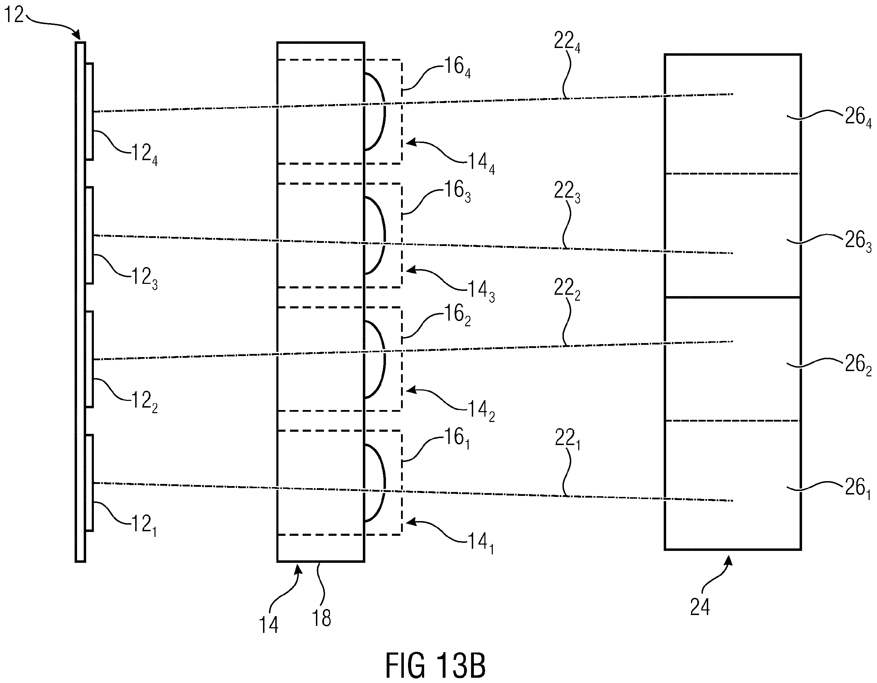

Die erwähnte möglicher Weise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angeordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angeordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz verwehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein rein In-Ebene-Versatz in Zeilenerstreckungsrichtung ändert die Bauhöhe nicht, aber er resultieren ggf. weniger Facetten und/oder die Facetten weisen nur eine Kippung in einer Winkelorientierung auf, was den Aufbau vereinfacht. Das ist in Fig. 13a und 13b veranschaulicht, bei denen die benachbarten Kanäle $14_1$ und $14_2$ einerseits und die benachbarten Kanäle $14_3$ und $14_4$ in der gemeinsamen Ebene verlaufende, jeweils gegeneinander schielende, also mit einer Vorab-Divergenz versehene, optische Achsen $14_1$ und $14_2$ bzw. $14_3$ und $14_4$ aufweisen. Die Facetten $26_1$ und $26_2$ können durch eine Facette gebildet werden und die Facetten $26_3$ und $26_4$ können durch eine andere Facette gebildet werden, wie es durch gestrichelte Linien zwischen den jeweiligen Paaren von Facetten gezeigt ist, und die einzigen zwei Facetten sind lediglich in einer Richtung geneigt und beide parallel zur Zeilenerstreckungsrichtung, d.h. ($\beta^i_z=0$ und $\beta^i_x\neq0$ für alle i und $\beta^1_x = \beta^2_x$ und $\beta^3_x = \beta^4_x$).

Ferner könnte es vorgesehen sein, dass manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafter Weise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecken, sondern lediglich zu Stereoskopiezwecken eine Ausführung, bei denen eine Gruppe von unmittelbar benachbarten Kanälen in Zeilenerstreckungsrichtung mit Ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken.

Fig. 10 veranschaulicht, dass die Multiaperturabbildungsvorrichtung 10 von Fig. 1 zusätzlich noch eine Einrichtung 50 zum Bewirken einer Rotation der Strahlumlenkvorrichtung 24 um eine Achse parallel zur Zeilenerstreckungsrichtung bzw. x-Achse aufweisen könnte. Die Drehachse liegt beispielsweise in der Ebene der optischen Achsen $22_1 - 22_4$ oder davon weniger als ein Viertel eines Durchmessers der Optiken $16_1 - 16_4$ entfernt. Alternativ wäre es natürlich auch möglich, dass die Drehachse weiter entfernt liegt, wie z.B. weniger als ein Optikdurchmesser oder weniger als vier Optikdurchmesser. Diese Einrichtung 50 könnte beispielsweise Teil einer Bildstabilisierungssteuerung der Vorrichtung 10 sein, indem durch adaptive Veränderung des Anstellwinkels Verwacklungen um die x-Achse ausgeglichen werden, und/oder zur Verstellung der Strahlumlenkvorrichtung 24 zwischen den Stellungen I und II, die Bezug nehmend auf Fig. 9 erwähnt wurden.

Ferner kann die Multiaperturabbildungsvorrichtung 10 von Fig. 10 zusätzlich oder alternativ eine Einrichtung 52 umfassen, die eine translatorische Bewegung der Optiken $16_i$ entlang der x-Achse bewirkt. Auch die Einrichtung 52 kann Teil einer Bildstabilisierung sein und beispielsweise Verwacklungen in einer Richtung senkrecht zu der vorerwähnten Verwacklungskompensation vermittels der Einrichtung 50 bewirken.

Zusätzlich oder alternativ kann die Vorrichtung 10 ferner noch eine Einrichtung 54 umfassen, die zur Fokuseinstellung einer Entfernung zwischen Bildsensor 12 und Optiken 16 entlang den optischen Achsen $22_i$ erzielt. Die Einrichtung 54 kann von einer Autofokussteuerung angesteuert sein oder aber manuell durch den Benutzer des Geräts, in das beispielsweise die Vorrichtung 10 eingebaut ist.

Die Einrichtung 52 dient also als Aufhängung der Optiken und ist vorzugsweise, wie in Fig. 4 angedeutet seitlich neben selbigen entlang der Zeilenerstreckungsrichtung angeordnet, um die Bauhöhe nicht zu erhöhen. Auch für die Einrichtungen 50 und 54 gilt, dass selbige vorzugsweise in der Ebene der optischen Strahlengänge angeordnet sind, um die Bauhöhe nicht zu erhöhen.

Es sei darauf hingewiesen, dass die Optiken $16_1 - 16_4$ nicht nur untereinander, wie z.B. über das schon erwähnte transparente Substrat, sondern auch relativ zu der Strahlumlenkvorrichtung in konstanter relativer Lage gehaltert sein können, wie z.B. über einen geeigneten Rahmen, der vorzugsweise die Bauhöhe nicht vergrößert und deshalb vorzugsweise in der Ebene der Komponenten 12, 14 und 24 bzw. in der Ebene der Strahlengänge verläuft. Die Konstanz der relativen Lage könnte sich auf den Abstand zwischen Optiken und Strahlumlenkvorrichtung entlang der optischen Achsen beschränken, so dass die Einrichtung 54 beispielsweise die Optiken $16_1 - 16_4$ zusammen mit der Strahlumlenkvorrichtung translatorisch entlang der optischen Achsen bewegt. Der Optiken-zu-Strahlumlenkvorrichtung-Abstand könnte auf einen minimalen Abstand eingestellt werden, so dass der Strahlengang der Kanäle nicht durch die Segmente der Strahlumlenkvorrichtung 24 lateral eingeschränkt wird, was die Bauhöhe verringert, da andernfalls die Segmente $26_i$ hinsichtlich der lateralen Ausdehnung für den größten Optiken-zu-Strahlumlenkvorrichtung-Abstand dimensioniert sein müssten, um den Strahlengang nicht einzuschneiden. Zusätzlich könnte die Konstanz der relativen Lage vorerwähnter Rahmen die Optiken und die Strahlumlenkvorrichtung entlang der x-Achse starr zueinander haltern, sodass die Einrichtung 52 die Optiken $16_1 - 16_4$ zusammen mit der Strahlumlenkvorrichtung translatorisch entlang der Zeilenerstreckungsrichtung bewegen würde.

Die oben beschriebene Strahlumlenkvorrichtung 24 zum Umlenken des Strahlengangs der optischen Kanäle ermöglicht zusammen mit dem Aktor 50 zur Erzeugung der Rotationsbewegung der Strahlumlenkvorrichtung 24 einer optischen Bildstabilisierungssteuerung der Multiaperturabbildungsvorrichtung 10 eine Bild- bzw. Gesamtblickfeldstabilisierung in zwei Dimensionen, nämlich durch die translatorische Bewegung des Substrats 18 eine Bildstabilisierung entlang einer ersten Bildachse, die im Wesentlichen parallel zur Strahlumlenkvorrichtung verläuft, und durch die Erzeugung der Rotationsbewegung der Strahlumlenkeinrichtung 24 eine Bildstabilisierung entlang einer zweiten Bildachse, die im Wesentlichen parallel zu den optischen Achsen vor bzw. ohne Strahlumlenkung verläuft, oder - betrachtet man die umgelenkten optischen Achsen - senkrecht zu den optischen Achsen und der Zeilenerstreckungsrichtung. Zusätzlich kann die beschriebene Anordnung eine translatorische Bewegung der im angesprochenen Rahmen fixierten Strahlumlenkvorrichtung und des Arrays 14 senkrecht zur Zeilenerstreckungsrichtung bewirken, wie z.B. durch den beschriebenen Aktor 54, die für die Realisierung einer Fokuseinstellung und damit einer Autofokusfunktion genutzt werden kann.

Es sei zu den obigen Ausführungen der Vollständigkeit halber noch darauf hingewiesen, dass die Vorrichtung bei einer Aufnahme über die Bildsensorbereiche ein Bild einer Szene pro Kanal aufnimmt, die durch die Kanäle auf die Bildsensorbereiche abgebildet worden sind, und dass die Vorrichtung optional über einen Prozessor verfügen kann, der die Bilder zu einem Gesamtbild zusammenfügt oder verschmelzt, das der Szene in dem Gesamtgesichtsfeld entspricht, und/oder zusätzliche Daten bereitstellt, wie zum Beispiel 3D-Bilddaten und Tiefeninformationen der Objektszene zur Erstellung von Tiefenkarten und zur softwaretechnischen Realisierung wie z.B. von Refocusing (Festlegung der Bildschärfebereiche nach der eigentlichen Aufnahme), All-in-Focus-Bildern, Virtual Green Screen (Trennung von Vorder- und Hintergrund) u.a.. Letztere Aufgaben könnten ebenfalls von jenem Prozessor erledigt werden oder extern. Der Prozessor könnte allerdings auch eine zu der Multiaperturvorrichtung externe Komponente darstellen..

Es sei zu den obigen Ausführungen noch darauf hingewiesen, dass die Facetten $26_i$ verspiegelt sein können. Alternativ wäre es möglich, dass zusätzlich Material zusätzlich zum parallelepipedförmigen Anteil des Trägersubstrats aus spiegelndem Material selbst zu bilden, so dass eine eigene Verspiegelung entfallen könnte.

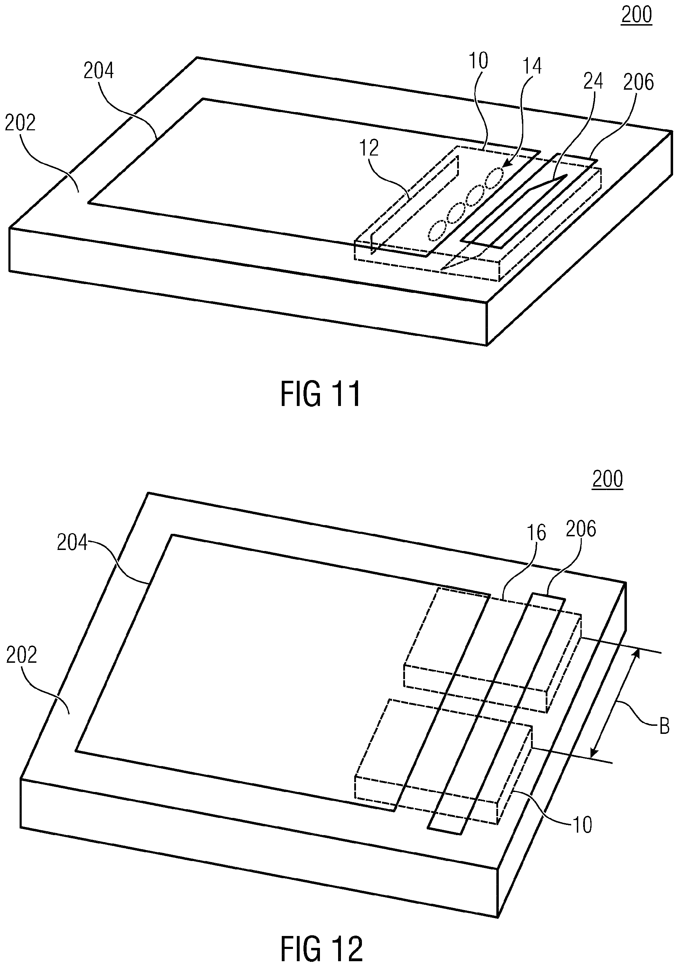

Fig. 11 illustriert, dass Vorrichtungen 10 der vorher beschrieben Alternativen beispielsweise in einem flachen Gehäuse eines tragbaren Geräts 200 eingebaut sein können, wie zum Beispiel eines Mobiltelefons oder Mediaplayers oder dergleichen, wobei dann beispielsweise die Ebenen des Bildsensors 12 bzw. der Bildsensorbereiche und die Linsenebenen der Optiken der Kanäle 14 senkrecht zu der flachen Erstreckungsrichtung des flachen Gehäuses bzw. parallel zur Dickenrichtung ausgerichtet sind. Auf diese Weise würde beispielsweise die Strahlumlenkvorrichtung 24 dafür sorgen, dass das Gesamtgesichtsfeld der Multiaperturabbildungsvorrichtung 10 vor einer Vorderseite 202 des flachen Gehäuses liegt, das beispielsweise auch einen Bildschirm aufweist. Alternativ wäre auch eine Umlenkung derart möglich, dass sich das Gesichtsfeld vor einer Rückseite des flachen Gehäuses, die der Vorderseite 202 gegenüberliegt, befindet. Das Gehäuse könnte ein transparentes Fenster in der durchdrungenen Seite 202 aufweisen, um die Strahlengänge der optischen Kanäle 14 durchzulassen. Es können weiterhin schaltbare Blenden (mechanisch bewegt, elektrochrom) angebracht sein, um den Lichteintritt durch die Öffnung des Fensters auf der Vorder- und/oder der Rückseite zu beeinflussen. Das Gehäuse des Geräts 200 bzw. das Gerät selbst kann flach sein, da durch die illustrierte Lage der Vorrichtung 10 in dem Gehäuse, die Bauhöhe der Vorrichtung 10, die zur Dicke des Gehäuses parallel ist, gering gehalten werden kann. Eine Umschaltbarkeit könnte ebenfalls vorgesehen werden, indem ein Fenster auf der der Seite 202 gegenüberliegenden Seite vorgesehen wird und beispielsweise die Strahlumlenkvorrichtung zwischen zwei Stellungen bewegt wird, indem letztere beispielsweise als Vor- und rückseitig spiegelnder Spiegel ausgeführt wird, wie es in Fig. 9 gezeigt war, und von der einen in die andere Stellung gedreht wird, oder als Facettenspiegel mit einem Satz von Facetten für die eine Stellung und einem anderen Satz von Facetten für die andere Stellung, wobei die Facettensätze in Zeilenerstreckungsrichtung nebeneinander liegen und durch translatorische Hin- und HerBewegung der Strahlumlenkvorrichtung entlang der Zeilenerstreckungsrichtung zwischen den Stellungen umgeschaltet wird. Ein Verbau der Vorrichtung 10 in ein anderes ggf. nicht tragbares Gerät, wie z.B. eine Auto, wäre natürlich ebenfalls möglich. Fig. 12 zeigt noch, dass mehrere Module 10, deren Teilgesichtsfelder ihrer Kanäle das gleiche Gesichtsfeld vollständig und optional sogar in kongruenter Weise abdecken, beispielsweise mit einem Basisabstand B zueinander entlang einer für beide Module gleichen Zeilenerstreckungsrichtung in dem Gerät 200 verbaut sein können, wie zum Beispiel zum Zweck der Stereoskopie. Mehr als zwei Module wären ebenfalls denkbar. Die Zeilenerstreckungsrichtungen der Module 10 könnten auch nicht kollinear, sondern lediglich parallel zueinander sein. Es sei jedoch noch einmal erwähnt, dass, wie im vorgehenden erwähnt, auch eine Vorrichtung 10 bzw. ein Modul mit Kanälen so ausgestattet sein könnte, dass dieselben gruppenweise dasselbe Gesamtgesichtsfeld jeweils vollständig abdecken.

Obige Ausführungsbeispiele lassen sich also in Form einer Multiaperturabbildungsvorrichtung implementieren, und zwar mit einzeiliger Kanalanordnung, wobei jeder Kanal ein Teilgesichtsfeld eines Gesamtgesichtsfeld überträgt und sich die Teilgesichtsfelder teilweise überlappen. Ein Aufbau mit mehreren der solchen Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein. Die zusammenhängende Zeile könnte identische Aktoren und ein gemeinsames Strahlumlenkelement nutzen. Ein oder mehrere eventuell im Strahlengang vorhandene verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkvorrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z.B. auf einer Leiterplatte nebeneinander angeordnet sind. Ein Autofokusantrieb kann so ausgeführt sein, dass das Strahlumlenkelement synchron mit den Optiken bewegt wird, oder ruhend ist.

**Patentansprüche**

1. Multiaperturabbildungsvorrichtung mit:

   einem Bildsensor (12);
   einer Mehrzahl (14) von optischen Kanälen ($14_1$, $14_2$, 143, $14_4$);
   einer Strahlumlenkvorrichtung (24) zum Umlenken von Strahlengängen ($22_1$, $22_2$, $22_3$, $22_4$) der Mehrzahl von optischen Kanälen, wobei die Strahlumlenkvorrichtung ein für die Mehrzahl von optischen Kanälen gemeinsames Trägersubstrat (34) aufweist,
   wobei ein Umlenkwinkel des Umlenkens des Strahlengangs ($22_1$, $22_2$, $22_3$, $22_4$) jedes optischen Kanals ($14_1$, $14_2$, $14_3$, $14_4$) auf einem Anstellwinkel des Trägersubstrats (34) der Strahlumlenkvorrichtung gegenüber dem Bildsensor (12) und auf einer Neigung einer dem optischen Kanal zugeordneten reflektierenden Facette ($26_1$, $26_2$, $26_3$, $26_4$) einer dem Bildsensor (12) zugewandten Oberfläche der Strahlumlenkvorrichtung (24) bezogen auf das Trägersubstrat (34), die unter den optischen Kanälen variiert, basiert.

2. Multiaperturabbildungsvorrichtung gemäß Anspruch 1, wobei für jeden Kanal ($14_1$, $14_2$, $14_3$, $14_4$) der Anstellwinkel größer ist als ein Neigungswinkel der Neigung der diesem Kanal zugeordneten reflektierenden Facette ($26_1$, $26_2$, $26_3$, $26_4$) gegenüber dem Trägersubstrat (34).

3. Multiaperturabbildungsvorrichtung gemäß Anspruch 1 oder 2, bei der die Mehrzahl von optischen Kanälen ($14_1$, $14_2$, $14_3$, $14_4$) ein einzeiliges Array bildet.

4. Multiaperturabbildungsvorrichtung gemäß Anspruch 3, bei der das Trägersubstrat (34) parallel zu einer Zeilenerstreckungsrichtung des einzeiligen Arrays positioniert ist und der Anstellwinkel in einer Ebene senkrecht zu der Zeilenerstreckungsrichtung liegt.

5. Multiaperturabbildungsvorrichtung gemäß einem der vorhergehenden Ansprüche, bei der die dem Bildsensor (12) zugewandte Oberfläche der Strahlumlenkvorrichtung (24) zumindest an den den optischen Kanälen ($14_1$, $14_2$, $14_3$, $14_4$) zugeordneten reflektierenden Facetten ($26_1$, $26_2$, $26_3$, $26_4$) verspiegelt ist.

6. Multiaperturabbildungsvorrichtung gemäß einem der vorhergehenden Ansprüche, bei der das Trägersubstrat (34) parallelepipedförmig ist und die den optischen Kanälen zugeordneten reflektierenden Facetten ($26_1$, $26_2$, $26_3$, $26_4$) durch ein auf dem parallelepipedförmigen Trägersubstrat (34) abgeformtes Material gebildet sind.

7. Multiaperturabbildungsvorrichtung gemäß einem der Ansprüche 1 bis 5, bei der das Trägersubstrat (34) einstückig mit den den optischen Kanälen zugeordneten reflektierenden Facetten ($26_1$, $26_2$, $26_3$, $26_4$) in der dem Bildsensor zugewandten Oberfläche gebildet ist.

8. Multiaperturabbildungsvorrichtung gemäß einem der vorhergehenden Ansprüche, bei der die Mehrzahl von optischen Kanälen ein einzeiliges Array bildet und das Trägersubstrat (34) drehbar um eine Drehachse gelagert ist, die parallel zu einer Zeilenerstreckungsrichtung des einzeiligen Arrays liegt.

9. Multiaperturabbildungsvorrichtung gemäß Anspruch 8, ferner einen ersten Aktor (50) zur Erzeugung einer Rotationsbewegung der Strahlumlenkvorrichtung (24) um die Drehachse aufweist.

10. Multiaperturabbildungsvorrichtung gemäß Anspruch 9, bei der der erste Aktor (50) von einer optischen Bildstabilisierungssteuerung der Multiaperturabbildungsvorrichtung gesteuert ist, so dass durch Erzeugung der Rotationsbewegung der Strahlumlenkvorrichtung eine Bildstabilisierung bewirkt wird.

11. Multiaperturabbildungsvorrichtung gemäß Anspruch 10, die ferner einen zweiten Aktor (52) zum translatorischen Bewegen von Optiken der Mehrzahl von optischen Kanälen entlang der Zeilenerstreckungsrichtung des einzeiligen Arrays aufweist, der ferner von der optischen Bildstabilisierungssteuerung der Multiaperturabbildungsvorrichtung gesteuert ist, so dass durch die translatorische Bewegung der Optiken der Mehrzahl von optischen Kanälen entlang der Zeilenerstreckungsrichtung des einzeiligen Arrays eine Bildstabilisierung entlang einer ersten Bildachse und durch die Erzeugung der Rotationsbewegung der Strahlumlenkvorrichtung eine Bildstabilisierung entlang einer zweiten Bildachse bewirkt wird.

12. Multiaperturabbildungsvorrichtung gemäß einem der vorhergehenden Ansprüche, die ferner einen dritten Aktor (54) zum translatorischen Bewegen von Optiken der Mehrzahl von optischen Kanälen entlang der Strahlengänge ($22_1$, $22_2$, $22_3$, $22_4$) der Mehrzahl von optischen Kanälen aufweist.

13. Multiaperturabbildungsvorrichtung gemäß Anspruch 12, bei der der dritte Aktor (54) von einer Fokussteuerung der Multiaperturabbildungsvorrichtung gesteuert ist.

14. Multiaperturabbildungsvorrichtung gemäß einem der vorhergehenden Ansprüche, bei der das Trägersubstrat (34) eine dem Bildsensor abgewandte Rückseite (36) sowie zwei zu der Zeilenerstreckungsrichtung und zueinander parallele Seitenflächen (40, 42), die die dem Bildsensor (12) zugewandte Oberfläche und die Rückseite (36) verbinden, aufweist, wobei ein Winkel $\gamma$ zwischen Rückseite und diejenige der Seitenflächen, die von dem Bildsensor (12) weiter entfernt ist, die Bedingung erfüllt, dass $0{,}9 \cdot (90° - \alpha_x^0) \leq \gamma \leq 1{,}1 \cdot (90° - \alpha_x^0)$, wobei $\alpha_x^0$ der Anstellwinkel ist.

15. Herstellung einer Multiaperturabbildungsvorrichtung gemäß einem der vorhergehenden Ansprüche, bei dem die den optischen Kanälen zugeordneten reflektierenden Facetten ($26_1$, $26_2$, $26_3$, $26_4$) erzeugt

werden durch

Abformung zusätzlichen Materials auf das Trägersubstrat (34) oder

Spritzgießen oder Pressen von Material, so dass das Trägersubtrat einstückig mit den den optischen Kanälen zugeordneten reflektierenden Facetten ($26_1$, $26_2$, $26_3$, $26_4$) in der dem Bildsensor zugewandten Oberfläche gebildet ist.

**Claims**

1. A multi-aperture imaging device, comprising:

    an image sensor (12);
    a plurality (14) of optical channels ($14_1$, $14_2$, $14_3$, $14_4$);
    a beam-deflecting device (24) for deflecting optical paths ($22_1$, $22_2$, $22_3$ $22_4$) of the plurality of optical channels, wherein the beam-deflecting device comprises a carrier substrate (34) common for the plurality of optical channels,
    wherein a deflection angle of deflecting the optical path ($22_1$, $22_2$, $22_3$, $22_4$) of each optical channel ($14_1$, $14_2$, $14_3$, $14_4$) is based on a setting angle of the carrier substrate (34) of the beam deflection apparatus with respect to the image sensor (12) and on an inclination with respect to the carrier substrate (34), which varies among the optical channels, of a reflecting facet ($26_1$, $26_2$, $26_3$, $26_4$) of a surface of the beam deflecting apparatus (24) facing the image sensor (12), the reflecting facet being allocated to the optical channel.

2. The multi-aperture imaging device according to claim 1, wherein, for each channel ($14_1$, $14_2$, $14_3$, $14_4$), the setting angle is greater than an inclination angle of the inclination of the reflecting facet ($26_1$, $26_2$, $26_3$, $26_4$) allocated to this channel with respect to the carrier substrate (34).

3. The multi-aperture imaging device according to claim 1 or 2, wherein the plurality of optical channels ($14_1$, $14_2$, $14_3$, $14_4$) forms a single-line array.

4. The multi-aperture imaging device according to claim 3, wherein the carrier substrate (34) is positioned parallel to a line extension direction of the single-line array and the setting angle is in a plane perpendicular to the line extension direction.

5. The multi-aperture imaging device according to any of the preceding claims, wherein the surface of the beam-deflecting device (24) facing the image sensor (12) is mirrored at least on the reflecting facets ($26_1$, $26_2$, $26_3$, $26_4$) allocated to the optical channels ($14_1$, $14_2$, $14_3$, $14_4$).

6. The multi-aperture imaging device according to any of the preceding claims, wherein the carrier substrate (34) is parallelepiped-shaped and the reflecting facets ($26_1$, $26_2$, $26_3$, $26_4$) allocated to the optical channels are formed by a material molded on the parallelepiped-shaped carrier substrate (34).

7. The multi-aperture imaging device according to any of claims 1 to 5, wherein the carrier substrate (34) is integrally formed with the reflecting facets ($26_1$, $26_2$, $26_3$, $26_4$) allocated to the optical channels in the surface facing the image sensor.

8. The multi-aperture imaging device according to any of the preceding claims, wherein the plurality of optical channels forms a single-line array and the carrier substrate (34) is pivoted around an axis of rotation which is parallel to a line extension direction of the single-line array.

9. The multi-aperture imaging device according to claim 8, further comprising a first actuator (50) for generating a rotary movement of the beam-deflecting device (24) around the axis of rotation.

10. The multi-aperture imaging device according to claim 9, wherein the first actuator (50) is controlled by an optical image stabilization control of the multi-aperture imaging device such that image stabilization is effected by generating the rotary movement of the beam-deflecting device.

11. The multi-aperture imaging device according to claim 10, further comprising a second actuator (52) for moving optics of the plurality of optical channels along the line extension direction of the single-line array in a translatory manner, which is further controlled by the optical image stabilization control of the multi-aperture imaging device such that, by moving the optics of the plurality of optical channels along the line extension direction of the single-line array in a translatory manner, image stabilization is effected along a first image axis and, by generating the rotary movement of the beam-deflecting device, image stabilization is effected along a second image axis.

12. The multi-aperture imaging device according to any of the preceding claims, further comprising a third actuator (54) for moving optics of the plurality of optical channels along the optical paths ($22_1$, $22_2$, $22_3$, $22_4$) of the plurality of optical channels in a translatory manner.

13. The multi-aperture imaging device according to claim 12, wherein the third actuator (54) is controlled by a focus control of the multi-aperture imaging device.

**14.** The multi-aperture imaging device according to any of the preceding claims, wherein the carrier substrate (34) comprises a rear side (36) facing away from the image sensor as well as two lateral faces (40, 42) parallel to the line extension direction and to one another, which connect the surface facing the image sensor (12) and the rear side (36), wherein an angle $\gamma$ between the rear side and the one of the lateral faces further apart from the image sensor (12) fulfills the condition that

$$0.9\cdot(90°-\alpha_x^0) \leq \gamma \leq 1.1\cdot(90°-\alpha_x^0),$$ wherein

$\alpha_x^0$ is the setting angle.

**15.** Manufacturing of a multi-aperture imaging device according to any of the preceding claims, wherein the reflecting facets ($26_1$, $26_2$, $26_3$, $26_4$) allocated to the optical channels are generated by:

> molding additional material onto the carrier substrate (34) or
> injection molding or pressing material such that the carrier substrate is formed integrally with the reflecting facets ($26_1$, $26_2$, $26_3$, $26_4$) allocated to the optical channels in the surface facing the image sensor.

## Revendications

**1.** Dispositif d'imagerie multi-ouverture avec:

> un capteur d'image (12);
> une pluralité (14) de canaux optiques ($14_1$, $14_2$, $14_3$, $14_4$);
> un dispositif de déviation de faisceau (24) destiné à dévier les trajets de faisceau ($22_1$, $22_2$, $22_3$, $22_4$) de la pluralité de canaux optiques, où le dispositif de déviation de faisceau présente un substrat porteur (34) commun pour la pluralité de canaux optiques,
> dans lequel un angle de déviation du trajet de faisceau ($22_1$, $22_2$, $22_3$, $22_4$) de chaque canal optique ($14_1$, $14_2$, $14_3$, $14_4$) est basé sur un angle d'attaque du substrat porteur (34) du dispositif de déviation de faisceau par rapport au capteur d'image (12) et sur une inclinaison d'une facette réfléchissante ($26_1$, $26_2$, $26_3$, $26_4$) associée au canal optique d'une surface faisant face au capteur d'image (12) du dispositif de déviation de faisceau (24) par rapport au substrat porteur (34) qui varie parmi les canaux optiques.

**2.** Dispositif d'imagerie multi-ouverture selon la revendication 1, dans lequel, pour chaque canal ($14_1$, $14_2$, $14_3$, $14_4$), l'angle d'attaque est supérieur à l'angle d'inclinaison de la facette réfléchissante ($26_1$, $26_2$,

$26_3$, $26_4$) associée à ce canal par rapport au substrat porteur (34).

**3.** Dispositif d'imagerie multi-ouverture selon la revendication 1 ou 2, dans lequel la pluralité de canaux optiques ($14_1$, $14_2$, $14_3$, $14_4$) forme une matrice d'une seule rangée.

**4.** Dispositif d'imagerie multi-ouverture selon la revendication 3, dans lequel le substrat porteur (34) est positionné de manière parallèle à une direction d'extension de rangée de la matrice d'une seule rangée et l'angle d'attaque se situe dans un plan perpendiculaire à la direction d'extension de rangée.

**5.** Dispositif d'imagerie multi-ouverture selon l'une des revendications précédentes, dans lequel la surface du dispositif de déviation de faisceau (24) faisant face au capteur d'image (12) est réfléchie au moins aux facettes réfléchissantes ($26_1$, $26_2$, $26_3$, $26_4$) associées aux canaux optiques ($14_1$, $14_2$, $14_3$, $14_4$).

**6.** Dispositif d'imagerie multi-ouverture selon l'une des revendications précédentes, dans lequel le substrat porteur (34) est de forme parallélépipédique et les facettes réfléchissantes ($26_1$, $26_2$, $26_3$, $26_4$) associées aux canaux optiques sont formées par un matériau moulé sur le substrat porteur de forme parallélépipédique (34).

**7.** Dispositif d'imagerie multi-ouverture selon l'une des revendications 1 à 5, dans lequel le substrat porteur (34) est formé d'une seule pièce avec les facettes réfléchissantes ($26_1$, $26_2$, $26_3$, $26_4$) associées aux canaux optiques dans la surface faisant face au capteur d'image.

**8.** Dispositif d'imagerie multi-ouverture selon l'une des revendications précédentes, dans lequel la pluralité de canaux optiques forme une matrice d'une seule rangée et le substrat porteur (34) est monté de manière rotative autour d'un axe de rotation qui est parallèle à une direction d'extension de rangée de la matrice d'une seule rangée.

**9.** Dispositif d'imagerie multi-ouverture selon la revendication 8, présentant par ailleurs un premier actionneur (50) destiné à générer un mouvement de rotation du dispositif de déviation de faisceau (24) autour de l'axe de rotation.

**10.** Dispositif d'imagerie multi-ouverture selon la revendication 9, dans lequel le premier actionneur (50) est commandé par une commande optique de stabilisation d'image du dispositif d'imagerie multi-ouverture de sorte que par la génération du mouvement de rotation du dispositif de déviation de faisceau soit provoquée la stabilisation d'image.

**11.** Dispositif d'imagerie multi-ouverture selon la revendication 10, comportant par ailleurs un deuxième actionneur (52) destiné au déplacement en translation des optiques de la pluralité de canaux optiques dans la direction d'extension de rangée de la matrice d'une seule rangée qui est par ailleurs commandé par la commande optique de stabilisation de l'image du dispositif d'imagerie multi-ouverture de sorte que par le déplacement en translation des optiques de la pluralité de canaux optiques dans la direction d'extension de rangée de la rangée unique soit provoquée une stabilisation d'image le long d'un premier axe d'image et que par la génération du mouvement de rotation du dispositif de déviation de faisceau soit provoquée une stabilisation d'image le long d'un deuxième axe d'image.

**12.** Dispositif d'imagerie multi-ouverture selon l'une des revendications précédentes, présentant par ailleurs un troisième actionneur (54) destiné à déplacer en translation les optiques de la pluralité de canaux optiques le long des trajets de faisceau ($22_1$, $22_2$, $22_3$ $22_4$) de la pluralité de canaux optiques.

**13.** Dispositif d'imagerie multi-ouverture selon la revendication 12, dans lequel le troisième actionneur (54) est commandé par une commande de focalisation du dispositif d'imagerie multi-ouverture.

**14.** Dispositif d'imagerie multi-ouverture selon l'une des revendications précédentes, dans lequel le substrat porteur (34) présente un côté arrière (36) éloigné du capteur d'image ainsi que deux faces latérales (40, 42) parallèles à la direction d'extension de rangée et entre elles qui connectent la surface orientée vers le capteur d'image (12) et le côté arrière (36), dans lequel un angle γ entre le côté arrière et celle des faces latérales qui est la plus éloignée du capteur d'image (12) remplit la condition que

$$(90º - \alpha_x^0) \leq \gamma \leq 1,1 \cdot (90º - \alpha_x^0),$$

où $\alpha_x^0$ est l'angle d'attaque.

**15.** Fabrication d'un dispositif d'imagerie multi-ouverture selon l'une des revendications précédentes, dans laquelle les facettes réfléchissantes ($26_1$, $26_2$, $26_3$, $26_4$) associées aux canaux optiques sont générées par
moulage d'un matériau additionnel sur le substrat porteur (34), ou
moulage par injection ou pressage de matériau de sorte que le substrat porteur soit formé d'une seule pièce avec les facettes réfléchissantes ($26_1$, $26_2$, $26_3$, $26_4$) associées aux canaux optiques dans la surface faisant face au capteur d'image.

FIG 1

FIG 2A

FIG 2B

FIG 3A

FIG 3B

$26_4$ $26_3$ $26_2$ $26_1$

38

36

## FIG 3C

$\beta_x^3$

$26_3$

38

36

## FIG 3D

FIG 4A

FIG 4B

FIG 4C

EP 3 338 441 B1

FIG 5A

34

38

36

FIG 5B

34

36

FIG 6A

43                43

34

36        38

FIG 6B

43        43        43

34

FIG 7

43        43

34

36

FIG 8

FIG 9

FIG 10

200

204

202

10 14 24 206

12

## FIG 11

200

204

202

16 206

B

10

## FIG 12

FIG 13A

EP 3 338 441 B1

FIG 13B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014111650 A